# EUROPEAN PATENT SPECIFICATION

(11) **EP 1 837 371 B1**
(45) Date of publication and mention of the grant of the patent: **29.09.2010**
(21) Application number: 05820023.9
(22) Date of filing: 20.12.2005
(51) Int. Cl.: C08L 23/00, B29C 55/00, C08J 5/18

(54) **STRETCHED FILM OF OLEFIN POLYMER**
GESTRECKTE OLEFINPOLYMERFOLIE
FILM ETIRE D'UN POLYMERE D'OLEFINE

(30) Priority: 20.12.2004 JP 2004368407; 24.02.2005 JP 2005049442
(43) Date of publication of application: 26.09.2007
(73) Proprietor: Tohcello Co., Ltd., Tokyo 104-0031 (JP); Du Pont-Mitsui Polychemicals Co., Ltd., Tokyo 105-7117 (JP)
(72) Inventor: SAWAI, Tohru, c/o Tohcello Co., Ltd., Koga-shi, Ibaraki 306-0213 (JP); SHIMIZU, Masaru, c/o Tohcello Co., Ltd., Koga-shi, Ibaraki 306-0213 (JP); SATO, Masanobu, Urayasu-shi, Chiba 279-0023 (JP)
(74) Representative: HOFFMANN EITLE
(86) International application number: PCT/JP2005/023832
(87) International publication number: WO 2006/068275

(56) References cited:
- JP-A- 04 093 340
- JP-A- 08 113 661
- JP-A- 10 060 186
- JP-A- 2003 026 868
- JP-A- 2004 216 584
- US-A- 3 365 520
- Nello Pasquini: "Polypropylene Handbook 2nd Edition" Hanser Publishers , Munich * page 386 - page 390 * * page 405 - page 414 *

## Description

### [Technical field]

The present invention relates to a stretched film of a propylene polymer that is superior in anti-static property and molded from a propylene polymer composition comprising a propylene polymer and potassium salt of an ethylene-unsaturated carboxylic acid copolymer.

### [Background art]

An olefin polymer (polyolefin) represented by polyethylene such as high pressure-low density polyethylene, linear-low density polyethylene or high density polyethylene, and polypropylene is excellent in transparency, water-proof property and chemicals-resisting property so that the polymer is utilized widely for use in packaging films and packaging materials such as containers.

As the olefin polymers are non-polar, molded materials derived therefrom are susceptible to generate static electricity and they are often incorporated with an anti-static agent according to the intended use. In case the olefin polymers are incorporated with a relatively low molecular anti-static agent such as a surfactant, however, a part of the anti-static agent vaporizes and a molding machine is thus stained therewith in the course of molding a film or the like, or alternatively the anti-static agent *per se* is oozed out on the surface of the film to exhibit anti-static effect, thus making the resultant film viscous with the anti-static agent exuded.

On the other hand, an alkali metal salt, in particular, potassium salt of the ethylene-unsaturated carboxylic acid copolymer is known as a conductive polymer having a surface resistivity value of 10⁷~10¹⁰ Ω (patent literature 1). It has been proposed to incorporate a thermoplastic resin such as polyethylene with a small amount of such potassium salt of the ethylene-unsaturated carboxylic acid copolymer in place of an anti-static agent such as a surfactant (patent literature 2). It has also been proposed a method wherein the potassium salt of the ethylene-unsaturated carboxylic acid copolymer is incorporated with 1∼40% by weight of a hydrophobic polymer such as polyethylene (patent literature 3).

In case polyethylene is incorporated with a small amount, for example, 15% by weight of the potassium salt of the ethylene-unsaturated carboxylic acid copolymer, the surface resistivity of the resultant film will be improved. In case the polymer is molded into a multi-layer film, however, a satisfactory surface resistivity may not be obtained depending on the thickness of the film of the aforesaid potassium salt or the sort and thickness of a film of the external layer. In the event a hydrophobic polymer is incorporated with a large amount of potassium salt of the ethylene-unsaturated carboxylic acid copolymer, a film of a significantly improved surface resistivity can be obtained, but the film abounding in such potassium salt of the ethylene-unsaturated carboxylic acid copolymer is not advantageous in the aspect of cost.
- [Patent literature 1]: JP-A-Sho. 60-240704 (page 3, the right-lower column)
- [Patent literature 2]: JP-A-Hei. 8-267671 (Tables 1 and 2)
- [Patent literature 3]: JP-A-2004-18660 (claim 1)

### [Disclosure of the Invention]

### [Problems to be solved by the Invention]

As a result of extensive research with an object of developing a process for exhibiting the anti-static effect of the potassium salt of the ethylene-unsaturated carboxylic acid copolymer in case of incorporating an olefin polymer with the potassium salt of the ethylene-unsaturated carboxylic acid copolymer, it has now been found that a film of an excellent anti-static performance can be achieved by stretching a film of the composition comprising a propylene polymer and the potassium salt of the ethylene-unsaturated carboxylic acid copolymer even in case of the proportion of the potassium salt of the ethylene-unsaturated carboxylic acid copolymer being small. The present invention has been accomplished on the basis of the above finding.

### [Means for solving the Problems]

The present invention provides a stretched film of a propylene polymer obtained from a propylene polymer composition (C) comprising a propylene polymer (A) and potassium salt of an ethylene-unsaturated carboxylic acid copolymer (B), the film having been stretched at a stretching factor in terms of plane factor of 10 to 70 times.

### [Effect of the Invention]

The stretched film of a propylene polymer of the present invention, as being stretched, has a significantly excellent anti-static property as compared with a film of the propylene polymer of the same composition.

### [Best Mode in practice of the Invention]

### The propylene polymer (A)

The propylene polymer (A) of the present invention is a homopolymer of propylene, 1-butene, 1-hexene, 4-methyl-1-pentene, or 1-octene; a copolymer of at least propylene and another α-olefins; or a polymer comprised predominantly of propylene and other polymerizable compound or compounds such as vinyl acetate, or an α,β-unsaturated carboxylic acid or a derivative thereof. There is no limitation in such propylene polymer irrespective of whether it is non-crystalline or crystalline, so far as the polymer can be oriented by stretching. A crystalline polymer is preferable as it is strongly oriented for crystallization.

The propylene polymer (A) may be, for example, a homopolymer of propylene or a random or block copolymer of propylene and at least one of the α-olefins such as ethylene, 1-butene, I-pentene, 1-hexene, 4-methyl-1-pentene, 1-octene, and 1-decene, which is a polymer containing propylene predominantly and has a melting point (Tm) usually within the range of 100-170°C, preferably 110-156°C {propylene polymer (A-2)}, produced and marketed under the name of polypropylene.

The propylene polymer (A) of the present invention may be a single polymer or a composition of at least two polymers selected from the aforesaid individual polymers.

In addition, the propylene polymer (A) of the present invention may be incorporated with thermoplastic resin or resins or a variety of the additives usually used for thermoplastic resins such as a heat-resisting stabilizer, a weather-resisting stabilizer, a UV-absorbing agent, a sliding agent, a slipping agent, a blocking-preventing agent, an anti-static agent, an anti-fogging agent, a pigment, a dyestuff, and inorganic or organic fillers within the range where the intent of the of the present invention is not exceeded.

### Potassium salt of ethylene-unsaturated carboxylic acid copolymer (B)

The potassium salt (potassium ionomer) of ethylene-unsaturated carboxylic acid copolymer (B) concerned with the present invention is a compound wherein a part or all of the carboxylic acid groups of ethylene-unsaturated carboxylic acid copolymer are neutralized with potassium (ions). Such potassium salt of the ethylene-unsaturated carboxylic acid copolymer can be obtained, for example, by neutralizing the carboxyl groups of the ethylene-unsaturated carboxylic acid copolymer with an oxide, carbonate, bicarbonate or hydroxide of potassium.

### Ethylene-unsaturated carboxylic acid copolymer

The ethylene-unsaturated carboxylic acid copolymer, which is a base polymer of the potassium salt of the ethylene-unsaturated carboxylic acid copolymer, is obtained by copolymerizing ethylene, unsaturated carboxylic acid or acids and any optional other monomer or monomers

The unsaturated carboxylic acid are, for example, acrylic acid, methacrylic acid, fumaric acid, maleic anhydride; monomethyl maleate, and monoethyl maleate. In particular, acrylic acid or methacrylic acid is preferable. Illustrative of the other monomer can become a copolymerizing component are, for example, a vinyl ester such as vinyl acetate or vinyl propionate, an ester of an unsaturated carboxylic acid such as methyl acrylate, ethyl acrylate, isopropyl acrylate, n-butyl acrylate, isobutyl acrylate, n-hexyl acrylate, iso-octyl acrylate, methyl methacrylate, ethyl methacrylate, dimethyl maleate, or diethyl maleate, or carbon monoxide. Among them, an ester of an unsaturated carboxylic acid is preferable.

Such ethylene-unsaturated carboxylic acid copolymer can be obtained by radical-copolymerizing ethylene and an unsaturated carboxylic acid and any other optional polar monomer at high temperature and pressure.

The content of the unsaturated carboxylic acid in the ethylene-unsaturated carboxylic acid copolymer as a base polymer of the present invention is 5-30% by weight, preferably 10-25% by weight while content of the optional monomer component is not more than 40% by weight, preferably not more than 20% by weight of the copolymer. The melt flow rate (190°C, load: 2160 g in accordance with JIS K7210 - 1999) of the ethylene-unsaturated carboxylic acid copolymer as base polymer is 1-1000, preferably 10-700.

In the potassium salt of the ethylene-unsaturated carboxylic acid copolymer (B) concerned with the present invention, the content of potassium (ion) in the potassium salt (B) (potassium ionomer) is preferably within the range of at least 0.4 m-mols, especially 0.7-3.0 m-mols per gram of the potassium salt (B). In the present invention, the ionomer having a desired content of potassium (ion) can be prepared by selecting the base polymer properly and adjusting the degree of neutralization with potassium salt.

The melt flow rate (190°C, load: 2160 g, JIS K7210-1999) of the potassium salt of the ethylene-unsaturated carboxylic acid copolymer (B) is preferably 0.01-100, especially 0.05-10 in the aspect of processability and practicability. Further, the melting point (Tm) of the potassium salt of the ethylene-unsaturated carboxylic acid copolymer (B) is preferably 70-110°C, especially 80-105°C.

The melting point (Tm) of the potassium salt of the ethylene-unsaturated carboxylic acid copolymer (B) is measured by using Q100 (TA Instrument) as a differential scanning colorimeter (DSC) in such manner that 5 mg of a sample of the potassium salt is precisely weighed, the sample is once molten by heating it from -50°C to 200°C at a heating rate of 10°C/minute, the temperature is maintained for 10 minutes at 200°C, the temperature is then depressed down to -50°C at a cooling rate of 10°C/minute for crystallization, the temperature is maintained for 5 minutes at -50°C, and the temperature is again elevated up to 200°C at a heating rate of 10°C /minute in accordance with JIS K7121 to obtain a thermomelting curve whereupon the top temperature in the melting peak is defined as the melting point (Tm).

In the present invention, the potassium salt of the ethylene-unsaturated carboxylic acid copolymer (B) may be one or a mixture of at least two.

### The propylene polymer composition (C)

The propylene polymer composition (C) concerned with the present invention is a composition comprising the propylene polymer (A) and the potassium salt of ethylene-unsaturated carboxylic acid copolymer (B), the composition being within the range of preferably 99-60% by weight, more preferably 97-65% by weight, and the most preferably 95-70% by weight of the propylene polymer (A) and 1-40% by weight, more preferably 3-35% by weight, and the most preferably 5-30% by weight of the potassium salt of ethylene-unsaturated carboxylic acid copolymer (B).

A composition comprising less than 1% of the potassium salt of ethylene-unsaturated carboxylic acid copolymer (B) will not exhibit the depressing effect of the surface resistance value due to extrusion even when the composition is extruded. On the other hand, a composition comprising the potassium salt of ethylene-unsaturated carboxylic acid copolymer (B) in an amount exceeding 40% by weight, the resultant stretched film will lose the inherent character of the propylene polymer (A).

### Stretched film of the propylene polymer

The stretched film of the propylene polymer of the present invention is a film obtained by stretching the propylene polymer composition (C) and has a stretching factor in terms of plane factor of 10-70 times and preferably 30-65 times.

A film having a stretching factor in terms of plane factor less than 3 times may not exhibit an improved effect in the surface resistance value due to stretching. On the other hand, there is no special limitation in the upper limit of the stretching factor in terms of plane factor, but the film of a stretching factor in terms of plane factor exceeding 70 times may be broken down at the time of stretching, thus failing to obtain a good stretched film.

The stretching may be uniaxial or biaxial so far as the stretching ratio satisfy the stretching factor in terms of plane factor, but biaxial stretching is preferable in the aspect of excellent transparency and film strength in respect of easily exhibiting anti-static property. The biaxially stretching may be concurrent or successive.

In case of the biaxially stretching, the lengthwise stretching is usually within the range of 2-12 times and preferably 3-10 times while the lateral stretching is usually within the range of 2-12 times and preferably 3-10 times.

The stretched film of the propylene polymer of the present invention may be a unilayer (single layer) or multi-layer of at least two layers. In case of the multi-layer film, at least one layer should be the stretched film of the propylene polymer obtained from the propylene polymer composition (C), but other layer or layers may not necessarily contain the potassium salt of the ethylene-unsaturated carboxylic acid copolymer (B).

In case the multi-layer film is used as the stretched film of the propylene polymer concerned with the present invention, if the multi-layer film, i.e. a stretched film obtained from the propylene polymer composition (C) is on the surface thereof, the surface resistivity is usually within the range of not more than I × 10¹²Ω, preferably 1 × 10⁷ ∼ 1 × 10¹²Ω and the applied charge decay time is not more than 0.1 second. On the other hand, if the stretched film obtained from the propylene polymer composition (C) exists in an intermediate layer, the surface resistivity s on the surface layer thereof, i.e. the surface resistivity of an olefin polymer film forming the surface layer, is usually as high as at least 1 × 10¹⁶Ω, while the applied charge decay time is not more than 0.1 second, thus showing that the stretched film obtained from the propylene polymer composition (C) is excellent in anti-static property irrespective of whether the film exists on the surface layer or the intermediate layer.

There is no particular limit on the thickness of the film of the propylene polymer of the present invention, since the thickness depends on the intended use. The thickness in case of a single layer is usually within the range of 3-200 µm, preferably 5-80 µm. In case of a multi-layer film of at least two layers, the thickness of the propylene polymer film obtained from the propylene polymer composition (C) may usually be within the range of 0.5-100 µm, preferably 1-80 µm.

The stretched film of the propylene polymer concerned with the present invention may be subjected, if necessary, to a surface treatment such as corona treatment or flame treatment on either or both sides thereof. According to the intended use, the stretched film of the propylene polymer concerned with the present invention may be laminated with one or more of a low melting polymer such as high pressure low density polyethylene, linear low density polyethylene, a crystalline or low crystalline random copolymer of ethylene and an α-olefin having 3-10 carbon atoms, a random copolymer of ethylene and propylene or an α-olefin having at least 4 carbon atoms, polybutene, ethylene-vinyl acetate copolymer, for furnishing the stretched polymer with low temperature heat sealing property. The stretched film may further be laminated with ethylene-vinyl alcohol copolymer, polyamide, polyester, or a polymer of vinylidene chloride by way of extruding-coating or film-laminating for improving gas-barrier property, or may be vapor-deposited with a metal or an oxide thereof or silica. It is a matter of course that the stretched film may be anchor-treated on the surface thereof with an imine, urethane or the like for enhancing binding property with other substances or may be laminated with polyolefin modified with maleic anhydride.

### Process for producing the stretched film of the propylene polymer

The stretched (oriented) film of the propylene polymer concerned with the present invention can be produced according to various known processes.

In case the stretched film of the olefin polymer is a uniaxially stretched film, a film or sheet obtained by melt-extruding the propylene polymer composition (C) comprising the propylene polymer (A) and the potassium salt of ethylene-unsaturated carboxylic acid copolymer (B) is stretched in machine direction so as to satisfy the stretching factor in terms of plane factor within the aforesaid range. There is no particular limitation in stretching so far as the propylene polymer (A) used is oriented at a stretching temperature, but stretching is carried out usually at a melting point of the propylene polymer (A)-50°C to the melting point+30°C, preferably from a melting point-30°C to the melting point+20°C.

The stretching is carried out at 80-160°C, preferably 90-150°C.

In case the stretched film of the olefin polymer is a biaxially stretched film, a film or sheet obtained by melt-extruding the propylene polymer composition (C) comprising the propylene polymer (A) and the potassium salt of the ethylene-unsaturated carboxylic acid polymer (B) is stretched in machine and transverse directions so as to satisfy the stretching factor in terms of plane factor within the aforesaid range.

There is no particular limitation in stretching so far as the polymer (A) used is oriented at a stretching temperature, the stretching is carried out usually from a melting point of the propylene polymer (A)-50°C to the melting point+30°C, preferably from a melting point-40°C to the melting point +20°C.

The stretching is carried out at 80-160°C, preferably 90-150°C.

In the case of a successive biaxially stretching, the lengthwise stretching is carried out usually within the range of 2-12 times, preferably 3-10 times, from a melting point of the propylene polymer (A)-50°C to the melting point+50°C, preferably the melting point-30°C to the melting point+20°C and then the lateral stretching is carried out within the range of 3 × 12 times, preferably 4X 10 times from a melting point of the propylene polymer (A)-50°C to the melting point+30°C, preferably the melting point -40°C ∼ the melting point+20°C .

### [Examples]

The present invention will now be illustrated in more detail by way of Examples. It is to be construed however that the present invention is not limited by these Examples unless the invention overstep the scope thereof.

### <Method of measurement>

(1) Melting characteristic: In accordance with JIS K7121, the melting point was determined according to the following conditions using DSC (differential scanning calorimeter).
   Using Q100 (manufactured by TA Instrument Inc.) as a differential scanning calorimeter (DSC), about 5 mg of a sample is precisely weighed and the operation is carried out in accordance with JIS K7121 in such manner that the sample is once molten by heating it from -50°C to 200°C at a heating rate of 10°C/minute, the molten sample is maintained at 200°C for 10 minutes, the sample is then cooled down to -50°C at a cooling rate of 10°C/minutes for crystallization, the sample is maintained at -50°C for 5 minutes, and the sample is again heated up to 200°C at a heating rate of 10°C/minute to obtain a thermomelting curve whereupon the top temperature in the melting peak is defined as the melting point (Tm), with the proviso that in case of at least two melting peaks, the top temperature of the maximum endothermic peak is defined as the melting point.
(2) The surface resistivity :
   A film test piece allowed to stand at 23°C in the 50% RH atmosphere for 24 hours and 480 hours is measured for the surface resistivity by way of ULTRA HIGH RESISTANCE METER (manufactured by ADVANTEST).
(2) The applied charge decay time (decay time) : Using s Static Decay Meter Model 406D (manufactured by ETS Inc.), 5000 V is charged to a film test piece allowed to stand for 480 hours at 23°C in the atmosphere of 50% RH and a period of time required for decreasing the initially charged voltage (5000V) to 1/2 (2500V) is defined as the decay time (second).

The polymers used in Examples and Comparative Examples are as shown below.
(1) The olefin polymer (A)
(1-1) Ethylene polymer (A-1) (Reference)
(a) Ethylene-1-hexene random copolymer composition (LLDPE:EHC-1)
   density: 0.915 g/cm³, MFR: 1.9 g/10 minutes
(b) Ethylene-1-hexene random copolymer composition (LLDPE:EHC-2)
   density: 0.925 g/cm³, MFR: 2.0 g/10 minutes
(c) Ethylene-1-hexene random copolymer composition (LLDPE:EHC-3)
   density: 0.914 g/cm³, MFR: 1.9 g/10 minutes
(1-2) Propylene polymer (A-2) (Invention)
(d) Propylene-ethylene-1-butene random copolymer (PEB)
   ethylene content: 3.3 mol%, 1-butene content: 1.5 mol%, melting point: 140°C, MFR:7 g/10 minutes
(e) Propylene homopolymer (PP)
   melting point: 158°C, MFR: 7 g/10 minutes
(2) Potassium salt of Ethylene-unsaturated carboxylic acid copolymer (B)
(a) Potassium salt of Ethylene-methacrylic acid copolymer (B-1)
   melting point: 93.9°C, methacrylic acid content: 11.5% by weight, potassium ion
   density: 1.07 m-mol/g, MFR: 0.5 g/10 minutes, density: 0.95 g/cm³
(b) Potassium salt of Ethylene-methacrylic acid copolymer (B-2)
   melting point: 89.0°C, methacrylic acid content: 12.5% by weight, potassium ion
   density: 1.31 m-mol/g, MFR: 0.3 g/10 minutes, density: 0.960 g/cm³
(c) Potassium salt of Ethylene-methacrylic acid copolymer (B-3)
   melting point: 92.9°C, methacrylic acid content: 14.6% by weight, potassium ion
   density: 1.47 m-mol/g, MFR: 1.0 g/10 minutes, density: 0.96 8g/cm³
(d) Potassium salt of Ethylene-methacrylic acid copolymer (B-4)
   melting point: 100°C, methacrylic acid content: 9.0% by weight, potassium ion
   density: 0.89 m-mol/g, MFR: 1.9 g/10 minutes, density: 0.953 g/cm³.

### Example 1 (Reference)

### <Production of a laminated sheet>

A composition (C-1) wherein EHC-1: 90% by weight and B-1: 10% by weight had been dry-blended were prepared as an olefin polymer composition used for both surface layers and EHC-1 were prepared were prepared as an olefin polymer used for an intermediate layer(substrate layer), respectively. Using a 3 kind 3 layer one shaft extruder of 65 mm φ provided at the tip thereof with a T-die, C-1/EHC-1/C-1 were extruded at a thickness rate of 10/80/10 and quenched with a casting roll kept at 30°C to form a multi-layer sheet of 800 µm in thickness comprised of the three layers.

The extruding temperatures of C-1 and EHC-1 were both 230°C.

### <Production of a biaxially stretched film>

The resultant sheet was led to a roll heated at 110°C and subjected to roll stretching by 4 times in machine direction. The sheet thus stretched in machine direction was subjected to lateral stretching at 113°C by 8.5 times in lateral direction by the aid of a Tenter-type transverse stretching device, treated at 120°C for 3 seconds to effect thermosetting and then rewound to obtain a biaxially stretched multi-layer film having a stretching factor in terms of plane factor of 34 times.

Physical properties of the resultant biaxially stretched multi-layer film were measured according to the aforesaid measuring methods. A result of the measurement is shown in Table 1.

### Example 2 (Reference)

Example 1 was repeated in the same manner as described in Example 1 except that a composition (C-2) wherein EHC-1: 90% by weight and B-2: 10% by weight had been dry-blended was used in place of the olefin polymer composition (C-1) used in Example 1, whereby a biaxially stretched multi-layer film was obtained.

Physical properties of the resultant biaxially stretched multi-layer film are shown in Table 1.

### Example 3 (Reference)

Example 1 was repeated in the same manner as described in Example 1 except that a composition (C-3) wherein EHC-1: 90% by weight and B-3: 10% by weight had been dry-blended was used in place of the olefin polymer composition (C-1) used in Example 1 whereby a biaxially stretched multi-layer film was obtained.

Physical properties of the resultant biaxially stretched multi-layer film are shown in Table 1.

### Example 4 (Reference)

Example 1 was repeated in the same manner as described in Example 1 except that EHC-1 was used as an olefin polymer for use in both surface layers and C-1 was used as an olefin polymer composition for use in the intermediate layer (basic layer) whereby a biaxially stretched multi-layer film was obtained.

Physical properties of the resultant biaxially stretched multi-layer film are shown in Table 1.

### Example 5 (Reference)

Example 1 was repeated in the same manner as described in Example 1 except that a composition (C-4) wherein EHC-2: 90% by weight and B-3: 10% by weight had been dry-blended was used in place of the olefin polymer composition (C-1) used in Example 1, EHC-2 was used in place of EHC-1 used in Example 1, and the stretch ratio was 5 times in machine direction and 9 times in transverse direction, whereby a biaxially stretched multi-layer film was obtained.

Physical properties of the resultant biaxially stretched multi-layer film are shown in Table 1.

### Example 6 (Reference)

Example 1 was repeated in the same manner as described in Example 1 except that a composition (C-5) wherein EHC-3: 90% by weight and B-3: 10% by weight had been dry-blended was used in place of the olefm polymer composition (C-1) used in Example 1 and EHC-3 was used in place of EHC-1 used in Example 1, whereby a biaxially stretched multilayer film was obtained.

Physical properties of the resultant biaxially stretched multi-layer film are shown in Table 1.

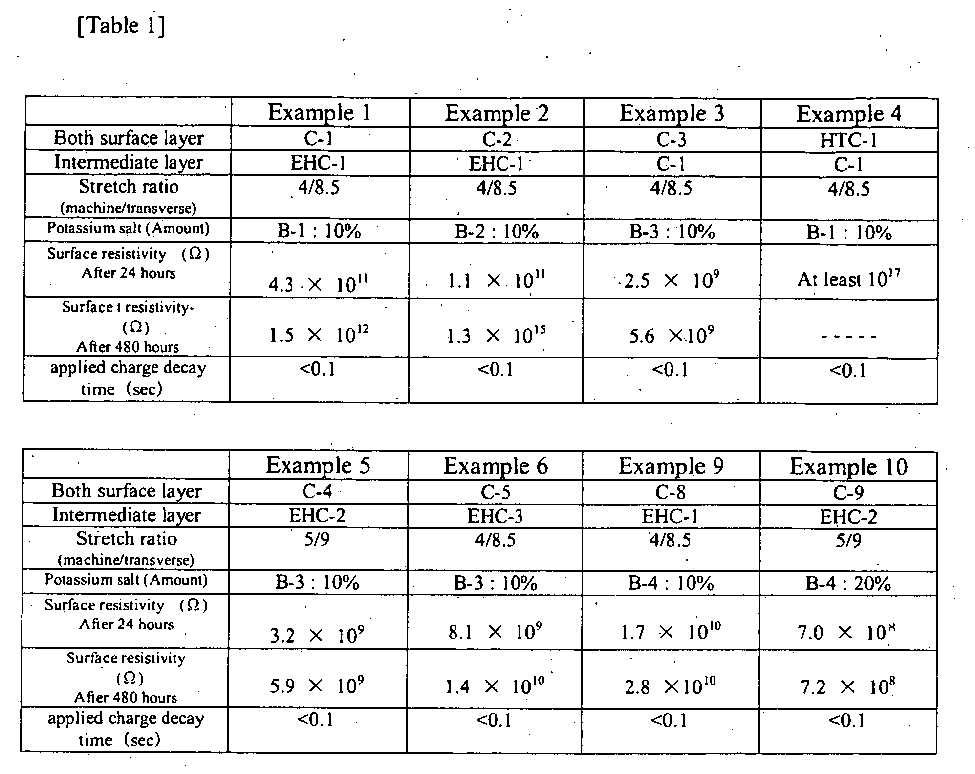

### Comparative Examples 1 ∼ 6

Physical properties of multi-layer sheets having a thickness of 800 µm and comprised of three layers obtained in Examples 1-6 were measured according to the aforesaid methods. A result of the measurements is shown in Table 2.

### Referential Example 1

Example 1 was carried out in the same manner as described in Example 1 except that EHC-1 100% by weight was used in place of the olefin polymer composition (C-1) used in Example 1, whereby a biaxially stretched multi-layer film was obtained.

Physical properties of the resultant biaxially stretched multi-layer film are shown in Table 2

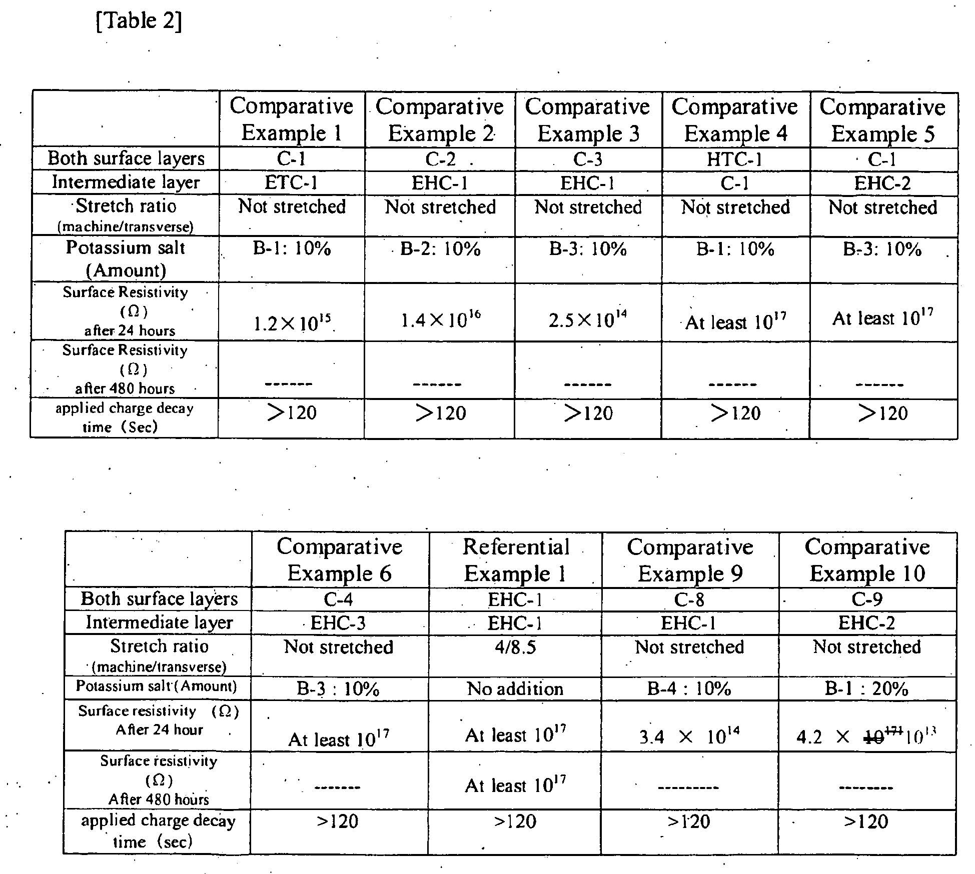

As is evident from Tables 1 and 2, the biaxially stretched films (Examples 1-4) obtained by biaxially stretching the olefin polymer compositions (C; C-1 ∼ C-3) which are obtained by adding 10% by weight of the potassium salt of ethylene-unsaturated carboxylic acid copolymer (B; B-1 ∼ B-3) to the olefin polymer (A) [ethylene-1-hexene random copolymer composition (LLDPE: EHC-1)] have a surface resistivity of 2.5 × 10⁹ ~ 4.3 × 10¹¹ Ω and applied charge decay time of not more than 5.2 seconds, thus showing remarkably excellent anti-static property as compared with similar cases wherein the polymer compositions incorporated with 10% by weight of potassium salt of ethylene-unsaturated carboxylic acid copolymer (B; B-1 to B-3) were not stretched [surface resistivity : 2.0 × 10¹⁴ ∼ 1.4 × 10¹⁶ Ω and applied charge decay time of at least 120 seconds (the under-mentioned Comparative Examples 1-3).

Similarly, biaxially stretched laminated films (Examples 5 and 6) obtained from the olefin polymer compositions (C; C-4 and C-5) which are obtained by adding 10% by weight of the potassium salt of ethylene-unsaturated carboxylic acid copolymer (B; B-3) to ethylene-1-hexene random copolymer (LLDPE:EHC-2) as the olefin polymer (A) or ethylene-1-hexene random copolymer (LLDPE:EHC-3) as the olefm polymer (A) ,have surface resistivity of 3.2× 10⁹ and 8.1 × 10⁹Ω and applied charge decay time of not more than 0.1 second.

It is also noted that in the case of a biaxially stretched multi-layer film (Example 4) obtained by biaxially stretching the olefin polymer composition (C-1) wherein the intermediate layer (substrate layer), has been incorporated with10% by weight of the potassium salt of ethylene-unsaturated carboxylic acid copolymer (B-1), the surface inherent resisting value is as high as at least 10¹⁷ Ω but applied charge decay time is indeed 0.1 second or less and is remarkably excellent in anti-static property as compared with a similar case wherein the olefin polymer composition (C-1) in which 10% by weight of the potassium salt of ethylene-unsaturated carboxylic acid (B-1) is added , but was not stretched [applied charge decay time: at least 120 seconds (Comparative Example 4).

By the way, a biaxially stretched film in case of the potassium salt of ethylene-unsaturated carboxylic acid copolymer (B) not being added (Referential Example 1) has a surface resistivity of at least 10¹⁷ Ω and applied charge decay time of at least 120 seconds.

### Example 7

### <Production of a multi-layer sheet>

A composition (C-6) wherein PEB: 90% by weight and B-3: 10% by weight had been dry-blended as a propylene polymer composition used for both surface layers and PP as a propylene polymer used for an in, termediate layer(substrate layer), were prepared respectively. Using a 3 kind 3 layer one shaft extruder of 65 mm φ provided at the tip thereof with a T-die, C-6/PP/C-6 were extruded at a thickness rate of 10/80/10 and quenched with a casting roll kept at 30°C to form a multi-layer sheet of 800 µm in thickness comprised of the three layers.

The extruding temperatures of C-6 and PP were 230°C and 250°C, respectively.

### <Production of a biaxially stretched film>

The resultant sheet was led to a roll heated at 120°C and subjected to roll stretching by 5 times in machine direction. The sheet thus stretched in machine direction was subjected to transverse stretching at 160°C by 10 times in lateral direction by the aid of a Tenter-type transverse stretching device, treated at 155°C for 3 seconds to effect thermosetting and then rewound to obtain a biaxially stretched multi-layer film having a stretching factor in terms of plane factor of 50 times.

Physical properties of the resultant biaxially stretched multi-layer film were measured according to the aforesaid measuring methods. A result of the measurement is shown in Table 3.

### Example 8

Example 5 was repeated in the same manner as described in Example 5 except that a composition (C-7) wherein PP: 90% by weight and B-3: 10% by weight had been dry-blended was used in place of the olefin polymer composition (C-6) used in Example 6 whereby a biaxially stretched multi-layer film was obtained.

Physical properties of the resultant biaxially stretched multi-layer film are shown in Table 3.

### Comparative Examples 7 and 8

Physical properties of a multi-layer sheet comprised of three layers having a thickness of 800 µm which was obtained in example5 and example6 were measured in the aforesaid manner and a result of the measurement is shown in Table 3.

### Referential Example 2

Example 5 was carried out in the same manner as described in Example 5 except that PEB: 100% by weight was used in place of the olefin polymer composition (C-5) used in Example 5, whereby a biaxially stretched multi-layer film was obtained.

Physical properties of the resultant biaxially stretched multi-layer film are shown in Table 3.

### Examples 9-11 and Comparative Examples 9-11

Baxially stretched multi-layer films were obtained, by stretch ratio described in Table 1 and 3.,in the same manner as described in Example 1,from olefin polymer composition (C-8), (C-9) or (C-10) obtained in the same manner as described in Example 1, except that both surface layers and an intermediate layer are the same manner as shown in Tables I and 3,

Throughout Tables:
C-8: EHC-1/B-4 = 90% by weight/10% by weight,
C-9: EHC-2/B-4 = 80% by weight/20% by weight, and
C-10: PEB/B = 90% by weight/10% by weight.

**[Table 3]**

| Example 7 | | Example 8 | Comparative Example 7 | Comparative Example 8 |
|---|---|---|---|---|
| Both surface layers | C-6 | C-7 | C-6 | C-7 |
| Intermediate layer | PP | PP | PP | PP |
| Stretch ratio (machine/transverse) | 5/10 | 5/10 | Not stretched | Not stretched |
| Potassium salt (Amount) | B-3 : 10% | B-3: 10% | B-3 : 10% | B-3 : 10% |
| Surface resistivity (Ω) After 24 hour | 3.5 × 10⁹ | 8.9 × 10¹¹ | 4.2 × 10¹⁴ | 9.0 × 10¹⁴ |
| Surface resistivity (Ω) After 480 hours | 3.8 × 10⁹ | 5.6 × 10¹¹ | ------- | --------- |
| applied charge decay time (sec) | <0.1 | <0.1 | > 120 | > 120 |

As is evident from Table 3, it is understood that the biaxially stretched multi-layer film (Example 7) obtained by biaxially stretching the propylene polymer composition (C-6) prepared by adding 10% by weight of the potassium salt of propylene-ethylene unsaturated carboxylic acid copolymer (B-3) to the propylene polymer (A) [propylene-ethylene-1-butenerandom copolymer (PEB)] has a surface resistivity of 3.5 × 10⁹ Ω and applied charge decay time of 0.1 second or less and is remarkably excellent in the anti-static property as compared with the case of being incorporated with 10% by weight of the same potassium salt (B-3) but is not being stretched [a surface resistivity : 4.2 × 10¹³ Ω, applied charge decay time : at least 120 seconds (Comparative Example 7)].

| | Referential Example 2 | Example 11 | Comparative Example 11 |
|---|---|---|---|
| Both surface layers | PEB | C-10 | C-10 |
| Intermediate layer | PP | PP | PP |
| Stretch ratio (Lengthwise/Lateral) | 5/10 | 5/10 | Not stretched |
| Potassium salt (Amount) | No addition | B-4: 10% | B-4 : 10% |
| Surface resistivity (Ω) After 24 hour | At least 10¹⁷ | 6.5 × 10⁹ | 8.9 × 10¹² |
| Surface resistivity (Ω) After 480 hours | At least 10¹⁷ | 6.1 × 10⁹ | -------- |
| applied charge decay time (sec) | > 180 | <0.1 | > 120 |

It is also noted likewise that the biaxially stretched multi-layer film (Example 8) obtained by biaxially stretching the propylene polymer composition (C-7) prepared by adding 10% by weight of the potassium salt of propylene-ethylene unsaturated carboxylic acid copolymer (B-3) to the olefin polymer (A) [polypropylene homopolymer (PP)], has a surface resistivity of 3.5×10¹¹ Ω and applied charge decay time of 0.1 second or less and is remarkably excellent in the anti-static property as compared with the case of being incorporated with 10% by weight of the same potassium salt (B-3) but is not being stretched [a surface resistivity : 4.2 × 10¹⁴Ω, applied charge decay time : at least 120 seconds (Comparative Example 8)].

By the way, the case of a biaxially stretched film not being incorporated with the potassium salt (B) of ethylene-unsaturated carboxylic acid copolymer (Referential Example 2) has a surface resistivity of at least 10¹⁷ Ω and applied charge decay time of at least 180 seconds.

### [Industrial Applicability]

The stretched films of propylene polymers concerned with the present invention are excellent in transparency in addition to anti-static property, as these properties are required for use in packaging for food and medicaments for the sake of see-through recognition and sense for beautiful appearance. What is more, the effect is semi-permanent.

The stretched film is useful as a hygienic packaging material as it does not permit oozing out of any anti-static agent itself on the surface of the film to impart viscous feeling as seen in the case of adding a relatively low molecular anti-static agent such as a surfactant to a film or it does not permit any migration of the anti-static agent to the contents of the film.

## Claims

1. A stretched film of a propylene polymer, which has been obtained from a propylene polymer composition (C) comprising a propylene polymer (A) and potassium salt of an ethylene-unsaturated carboxylic acid copolymer (B) and has been stretched at a stretching factor in terms of plane factor of 10 to 70 times.

2. The stretched film of the propylene polymer according to claim 1,wherein the stretched film is a biaxially stretched film.

3. The stretched film of the propylene polymer according to claim 1, wherein the propylene polymer composition (C) comprises 99-60% by weight of the propylene polymer (A) and 1-40% by weight of potassium salt of the ethylene-unsaturated carboxylic acid copolymer.

4. The stretched film of the propylene polymer according to claims 1 to 3, wherein the propylene polymer (A) is a propylene-α-olefin random polymer having a melting point (Tm) of 110-156 °C.

5. The stretched film of the propylene polymer according to claims 1 to 3, wherein the propylene polymer (A) is propylene homopolymer.

## Patentansprüche

1. Gestreckte Folie eines Propylenpolymers, die aus einer Propylenpolymerzusammensetzung (C) erhältlich ist, welche ein Propylenpolymer (A) und ein Kaliumsalz eines Ethylen-ungesättigten Carboxylsäurecopolymers (B) umfasst, und welche mit einem Streckfaktor von 10 bis 70-mal in der Ebene gestreckt ist.

2. Gestreckte Folie des Propylenpolymers gemäß Anspruch 1, wobei die gestreckte Folie eine biaxial gestreckte Folie ist.

3. Gestreckte Folie des Propylenpolymers gemäß Anspruch 1, wobei die Propylenpolymerzusammensetzung (C) 99 bis 60 Gew.% eines Propylenpolymers (A) und 1 bis 40 Gew.% eines Kaliumsalzes des Ethylen-ungesättigten Carboxylsäurecopolymers umfasst.

4. Gestreckte Folie des Propylenpolymers gemäß den Ansprüchen 1 bis 3, wobei das Propylenpolymer (A) ein ataktisches Propylen-α-Olefinpolymer mit einem Schmelzpunkt von 110 bis 156°C ist.

5. Gestreckte Folie des Propylenpolymers gemäß den Ansprüchen 1 bis 3, wobei das Propylenpolymer (A) Propylenhomopolymer ist.

## Revendications

1. Film étiré d'un polymère de propylène, qui a été obtenu à partir d'une composition de polymère de propylène (C) comprenant un polymère de propylène (A) et le sel de potassium d'un copolymère éthylène-acide carboxylique insaturé (B) et a été étiré à un facteur d'étirage en termes de facteur plan de 10 à 70 fois.

2. Film étiré du polymère de propylène selon la revendication 1 où le film étiré est un film étiré biaxialement.

3. Film étiré du polymère de propylène selon la revendication 1 où la composition de polymère de propylène (C) comprend 99 - 60 % en poids de polymère de propylène (A) et 1 - 40 % en poids de sel de potassium du copolymère éthylène-acide carboxylique insaturé.

4. Film étiré du polymère de propylène selon les revendications 1 à 3 où le polymère de propylène (A) est un polymère statistique propylène-α-oléfine ayant un point de fusion (Tm) de 110 - 156°C.

5. Film étiré du polymère de propylène selon les revendications 1 à 3 où le polymère de propylène (A) est un homopolymère de propylène.
